# EUROPÄISCHE PATENTANMELDUNG

(11) **EP 2 722 167 A1**
(43) Veröffentlichungstag der Anmeldung: **23.04.2014**
(21) Anmeldenummer: 12188752.5
(22) Anmeldetag: 17.10.2012
(51) Int. Cl.: B32B 5/18

(54) **Antiseptische Einbauten für Hygiene- und Klinikbereiche**

(71) Anmelder: WIBU Wirtschaftsbund sozialer Einrichtungen Zentralverwaltungs GmbH, 22926 Ahrensburg (DE)
(72) Erfinder: Baier, Helmut, 85778 Haimhausen (DE)
(74) Vertreter: Kruspig, Volkmar

(57) **Zusammenfassung**

Die Erfindung betrifft Antiseptische Einbauten für Hygiene- und Klinikbereiche. Die Einbauten bestehen aus Einbauelementen mit einem Grundkörper aus einem Fassadenwerkstoff bestehend aus einem Polyurethan-Hartschaum und in den Polyurethan-Hartschaum eingelagerten partikelartigen mineralischen, metallischen und/oder Kunststoffzusätzen in Verbindung mit einer auf den Grundkörper aufgebrachten Deck- und Zierschicht.

## Beschreibung

Die Erfindung betrifft antiseptische Einbauten für Hygiene- und Klinikbereiche sowie Nassbereiche nach Anspruch 1.

Derartige Einbauten werden im Hygiene- und Klinikbereich in Form von Ablagen, Regalen, Beistelltischen, Zurichtplatten, Raumteilern, Verkleidungen und dergleichen Objekten verwendet. Diese Gegenstände müssen feuchtigkeitsbeständig, abwaschbar, desinfizierbar, wärmedämmend, temperaturbeständig und widerstandsfähig gegenüber der Einwirkung unterschiedlicher, zum Teil aggressiver Chemikalien sein. Gegenwärtig werden als Einbauten Gegenstände aus metallischen Werkstoffen, insbesondere aus Edelstählen, verwendet.

Metallische Einbauten erweisen sich jedoch in mehrerer Hinsicht als nachteilig. Dies betrifft zum einen die Tatsache, dass Edelstahleinbauten verhältnismäßig kostenintensiv sind. Zum anderen zeigt es sich, dass metallische Einbauten vorgeplant und vorgefertigt werden müssen, weil ein Verarbeiten vor Ort, insbesondere ein Anpassen an konkret vorliegende bauliche Gegebenheiten, nicht möglich ist. Denn metallische Werkstoffe erfordern einen zum Teil erheblichen Bearbeitungsaufwand. Dies zeigt sich insbesondere daran, dass sich derartige Werkstoffe nur mit einem erheblichen Aufwand zuschneiden lassen, sodass solche Arbeiten in der Regel nur in Werkstätten, also entfernt vom Ort des Einbaus, möglich sind und somit nicht operativ auszuführen sind.

Gleichwohl sind Einbauten aus Metall und Edelstahl für die genannten Einsatzbereiche nach wie vor das Mittel der Wahl.

Es stellt sich die der Erfindung zugrunde liegende Aufgabe, einen günstigen Ersatz für die bei derartigen Einbauten verwendeten metallischen Werkstoffe zu finden.

Die Aufgabe wird mit einer Vorrichtung mit den Merkmalen des Anspruchs 1 gelöst. Die Unteransprüche enthalten vorteilhafte und/oder zweckmäßige Ausführungsformen und Ausgestaltungen.

Die erfindungsgemäßen antiseptischen Einbauten für Hygiene- und Klinikbereiche sowie Nassbereiche bestehen aus Einbauelementen mit einem Grundkörper aus einem Fassadenwerkstoff. Der Fassadenwerkstoff besteht aus einem Polyurethan-Hartschaum und in den Polyurethan-Hartschaum eingelagerten partikelartigen mineralischen, metallischen und/oder Kunststoffzusätzen in Verbindung mit einer auf den Grundkörper aufgebrachten Deck- und Zierschicht. Die Deck- und Zierschicht schließt insbesondere eine Lackierung oder eine Bedeckung mit einem anderen Deckkörper ein.

Erfindungsgemäß wird somit der Gedanke verfolgt, anstatt der üblicherweise für Einbauten im Innenbereich verwendeten Werkstoffe auf einen Fassadenwerkstoff zurück zu greifen und die bei derartigen Werkstoffen vorhandenen Eigenschaften nunmehr in sensiblen Hygiene- und Klinikbereichen zu nutzen. Konkret kommt hier ein Grundkörper zur Anwendung, der aus einem Polyurethan-Hartschaum besteht und der partikelartige Zusätze aus mineralischen, metallischen oder Kunststoffpartikeln enthält.

Versuche haben gezeigt, dass ein derartiger Werkstoff nicht nur hervorragende Feuchtigkeit abweisende Wirkungen hat, sodass dieser leicht zu reinigen ist. Vielmehr hat sich in überraschender Weise gezeigt, dass derartige Werkstoffe gegenüber bakterieller Besiedelung ähnlich abweisend sind, wie die bislang verwendeten Metallwerkstoffe. Allerdings lassen sich die PU-Hartschäume weitaus umstandsloser bearbeiten, insbesondere zuschneiden oder zusägen. Sie können daher vor Ort an die konkrete Einbausituation angepasst werden. Weil derartige Werkstoffe an sich, d.h. ohne zusätzliche Abdeckung oder Versiegelung resistent gegenüber einer Keimbesiedelung sind und außerdem nicht zu Fäulniserscheinungen neigen, eignen diese sich für einen permanenten Einbau vergleichbar gut, wie die derzeit bevorzugten Einbauten aus Metall.

Bei einer ersten Ausführungsform ist der Grundkörper plattenförmig ausgebildet. Dabei bedeckt die Deck- und Zierschicht die Ober- und Unterseite des Grundkörpers. Eine derartige Ausführungsform eignet sich für regalartige bzw. behältnisartige Einbauten sowie Ablagen, als Möbelkorpus und/oder Wandverkleidung.

Bei einer weiteren Ausführungsform ist der Grundkörper als ein massiver Block ausgebildet. Der Block weist schüssel- oder beckenartige Ausnehmungen, insbesondere Vertiefungen und Hohlräume, auf. Eine derartige Ausführungsform eignet sich zur Realisierung von Auffangbehältnissen, beispielsweise für gebrauchte Instrumente und Hygieneartikel, aber auch als zur vorübergehenden Benutzung als Waschgelegenheit oder Wannenbad für Instrumente oder Körperteile wie Hände oder Füße.

Bei einer vorteilhaften Ausführungsform ist die auflaminierte Deck- und Zierschicht als eine mit einem Polyurethanklebstoff mit dem Grundkörper verklebte kratzfeste Hochdruck-Laminatschicht ausgebildet. Derartige Laminatschichten sind widerstandsfähig und beständig. Sie verbleiben lange auf dem Grundkörper.

Anstelle des Laminats sind auch Lackbeschichtungen möglich.

In Kombination mit einer der genannten Ausführungsformen ist der plattenförmige Grundkörper bei einer weiteren Ausgestaltung als ein einbaufertiges Standard-Verbundelement mit einer Standard-Dicke sowie einer Standard-Breite und einer Standard-Länge ausgebildet. Derartige Ausführungsformen eignen sich für Einbauten in großen Stückzahlen und Massenfertigungen, die installiert werden können, ohne das auf besondere Einbausituationen vor Ort Rücksicht genommen werden muss.

Bei einer weiteren Ausführungsform sind die Einbauelemente als Elemente einer Wandverkleidung, insbesondere als Kachelelemente, ausgebildet. Bei dieser Ausführungsform werden die Einbauelemente dazu verwendet, um zumindest teilweise Innenwände in der Umgebung der Einbauten in den Hygiene- und Klinikbereichen sowie den Nassbereichen zu verkleiden.

Die erfindungsgemäßen Einbauten sollen nachfolgend anhand von Ausführungsbeispielen näher erläutert werden. Zur Verdeutlichung dienen die beigefügten Figuren 1 bis 6 Es werden für gleiche oder gleich wirkende Teile dieselben Bezugszeichen verwendet.

Es zeigt:
- Fig. 1: einen beispielhaften Querschnitt durch einen plattenförmigen Grundkörper mit auflaminierten Deck- und Zierschichten,
- Fig. 2: einen Querschnitt durch einen blockförmigen Grundkörper mit einem eingefrästen Becken,
- Fig. 3: ein beispielhaftes Einbauregal mit umgebender Wandverkleidung,
- Fig. 4: einen beispielhaften Raumteiler,
- Fig. 5: eine beispielhafte Detailansicht eines Scharniers des Raumteilers,
- Fig. 6: eine beispielhafte Ansicht eines schrankartigen Möbelkorpus.

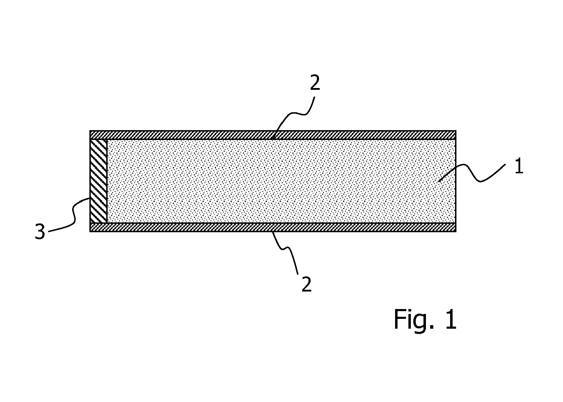

Fig. 1 zeigt beispielhaft einen plattenförmigen Grundkörper 1 mit auf den Grundkörper auflaminierten Deck- und Zierschichten 2. Der Grundkörper besteht aus einem FCKW-, HFCKW- und formaldehydfreien Polyurethan-Hartschaum-Werkstoff mit eingelagerten Partikeln aus metallischen, mineralischen und/oder Kunststoffmaterialien, die insbesondere Recyclingmaterialien sein können. Derartige Werkstoffe finden in der Gestaltung von Außenfassaden Anwendung. Die maximale Dickenquellung nach 24 Stunden durch Wasseranlagerung liegt bei diesen Materialien im Bereich von maximal 1,1%.

Die Deck- und Zierschichten 2 sind als ein Hochdrucklaminat (HPL - high pressure laminate) ausgebildet und mit dem Grundkörper mittels eines wasserfesten Klebstoffs verleimt. Als Klebstoff kommt hier insbesondere ein einkomponentiger Polyurethankleber zur Anwendung. Bei dem hier gezeigten Beispiel ist eine Kante 3 vorgesehen. Diese besteht beispielsweise aus einem ABS-Kunststoff (Acrylnitril-Butadien-Styrol) und somit einem Terpolymer mit wechselnden Anteilen der Komponenten Acrylnitril, Butadien und Styrol. Die Dicke der Kanten beträgt mindestens 0,4 mm. Ein derartiger Verbund ist feuerfest und zeigt bei einer Flammenbeaufschlagung keine offene Flamme, sondern ein leichtes Verkohlen und Glühen, wobei das Glühen von alleine erlischt. Der Verbund ist wasserfest. Er nimmt keine Nässe auf. Weiterhin sind keine Verformungen der Grundplatte und des Trägermaterials sowie der auflaminierten Deck- und Zierschichten festzustellen.

Eine so ausgebildete Platte kann mit Beschlägen versehen werden. Möglich sind hier insbesondere so genannte 270° Bänder in Objektqualität und insbesondere mit einer Schließautomatik zum Anbringen von Türen und Klappen. Die dafür notwendigen Ausnehmungen lassen sich in einfacher Weise in den Grundkörper einfräsen.

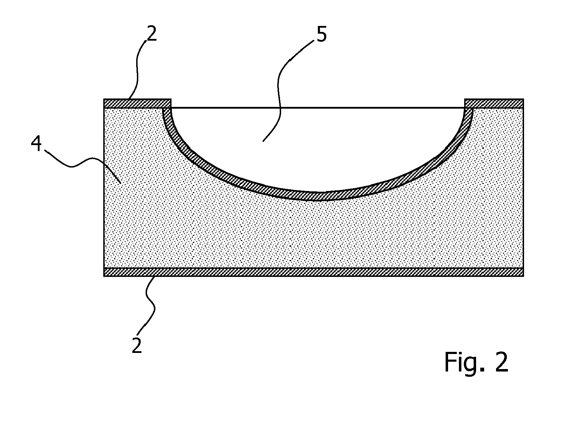

Fig. 2 zeigt eine Ausführungsform, bei der der Grundkörper als ein massiver Block 4 ausgebildet ist. Dieser weist eine trogartige Vertiefung 5 auf. Der Block und die trogartige Vertiefung weisen jeweils die Deck- und Zierschicht 2 auf, die in der oben beschriebenen Weise ausgebildet sein kann. Die trogartige Vertiefung kann durch die dafür üblichen Bearbeitungsverfahren, insbesondere durch ein Ausfräsen, erzeugt werden.

Soll die Vertiefung beckenartig, beispielsweise in Form einer Hohlkugel ausgebildet sein, kann anstelle der Laminierung mittels des HPL-Werkstoffs im Bereich der Vertiefung eine Lackierung aufgebracht sein, die der Oberfläche des Grundkörpers eine glatte und ebenfalls hydrophobe Struktur verleiht.

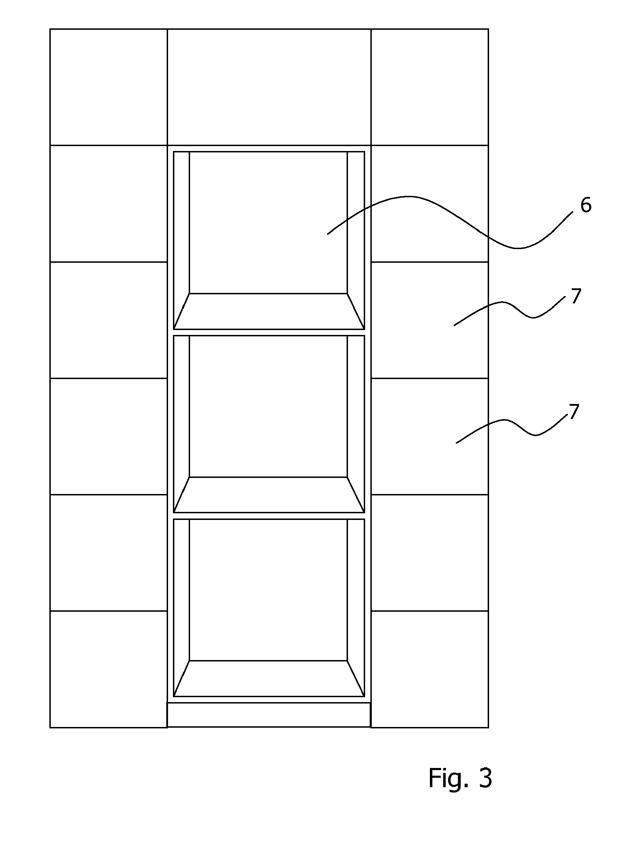

Die antiseptischen Einbauten können darüber hinaus auch als Mittel zur Verkleidung von Wandflächen verwendet werden. Fig. 3 zeigt ein diesbezügliches Beispiel. Dargestellt ist hier zum einen ein Regal 6. Das Regal ist von einer Reihe von plattenförmigen Kacheln 7 umgeben, die die umgebende Wand des Regals überdecken. Eine derartige Konfiguration eignet sich beispielsweise für das Installieren eines Regals oder eines Einbauschranks in einer baulich vorgesehenen Nische, wobei die umgebende Wand so überdeckt wird, dass die Regalfläche lückenlos in den Wandbereich übergeht.

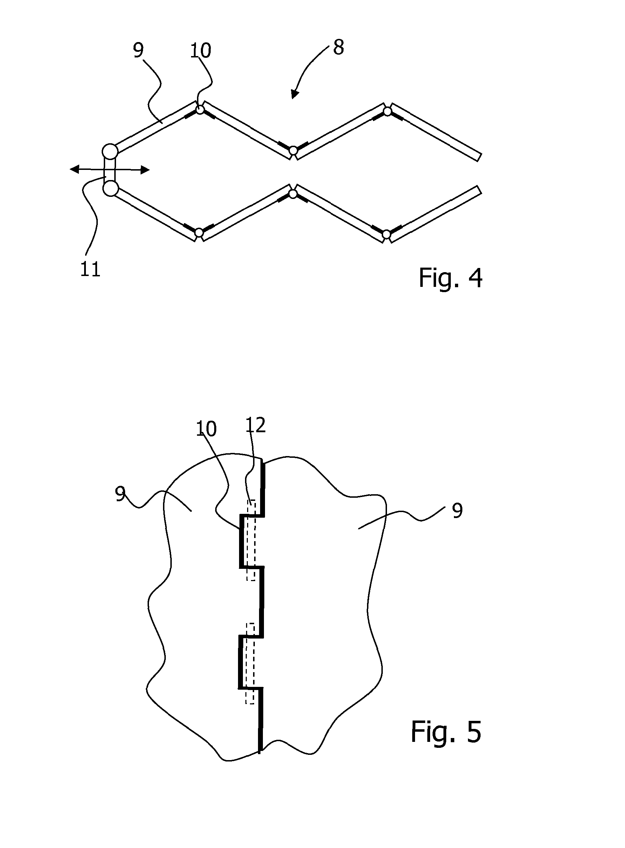

Fig. 4 zeigt einen verschiebbaren Raumteiler 8 als ein weiteres Beispiel für die Verwendung des Hartschaumverbundes im Bereich antiseptischer Einbauten. Der Raumteiler ist im hier vorliegenden Beispiel als Zieharmonika-Teiler ausgebildet. Er besteht aus einer Reihe von plattenförmigen Raumteilerelementen 9, die über Scharniere 10 miteinander verbunden sind. Die Raumteilerplatten sind gemäß dem Ausführungsbeispiel aus Fig. 1 ausgebildet. Sie weisen also einen aus dem PU-Hartschaum ausgebildeten Grundkörper mit den entsprechenden Laminierungen als Deck- und Zierschicht auf. Der Raumteiler weist einen Frontabschluss 11 auf, einen hier nicht dargestellten Griff zum Ziehen und Verstellen des Raumteilers aufweist. Natürlich kann die in diesem Beispiel doppelzügige Ziehharmonikaausführung durch eine nur einzügige Zieharmonikaausführung ersetzt sein, bei der nur die obere oder die untere Kette aus den gelenkig verbundenen Raumteilerelementen 9 vorhanden ist.

Die Scharniere 10 können auf unterschiedliche Weise ausgebildet sein. Vorteilhaft ist zum einen eine verzahnte Anordnung zwischen den Raumteilerelementen gemäß Fig. 5. Bei dem hier vorliegenden Beispiel ist eine Reihe von Scharnierbolzen 12 innerhalb der Raumteilerelemente versteckt, sodass der Scharnierspalt zwischen den Raumteilerelementen möglichst klein wird. Zusätzlich dazu empfiehlt es sich, den Scharnierspalt in Richtung des Hygiene- und Klinikbereichs abzudecken, um Ablagerungsmöglichkeiten für Staub möglichst zu minimieren und die gesamte Raumteilerfläche in einer möglichst einfachen und einheitlichen Weise ohne störende Fugen reinigen und desinfizieren zu können.

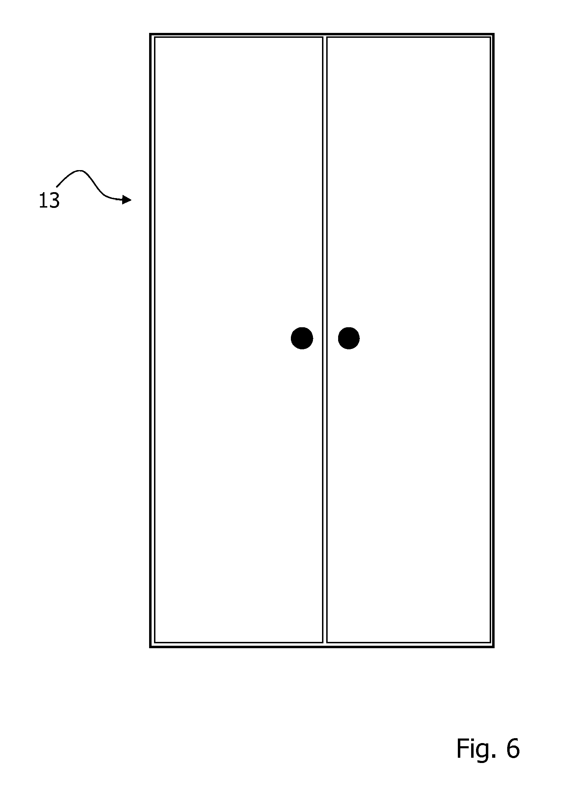

Fig. 6 zeigt einen schrankartigen Möbelkorpus 13. Dieser kann entweder als einzeln stehender Schrank oder als Teil einer Einbaufläche, insbesondere einer Einbaufläche gemäß dem Ausführungsbeispiel aus Fig. 3 ausgebildet sein. Anstelle des dort gezeigten Regals wird in einem solchen Fall der schrankartige Korpus eingefügt. Dieser weist in dem hier vorliegenden Beispiel zwei schwenkbare Türen auf. Andere Gestaltungen sind natürlich ebenfalls möglich.

Der Gegenstand der Erfindung wurde anhand beispielhafter Ausführungsformen erläutert. Im Rahmen fachmännischen Handelns sind weitere Ausführungsbeispiele möglich. Diese ergeben sich insbesondere aus den Unteransprüchen.

### Bezugszeichenliste

- 1: Grundkörper
- 2: Deck- und Zierschicht
- 3: Kante
- 4: massiver Block
- 5: Vertiefung, trogartig
- 6: Regal
- 7: Kachel
- 8: Raumteiler
- 9: Raumteilerelement
- 10: Scharnier
- 11: Frontabschluss
- 12: Scharnierbolzen
- 13: schrankartiger Möbelkorpus

## Patentansprüche

1. Antiseptische Einbauten für Hygiene- und Klinikbereiche,
bestehend aus
Einbauelementen mit einem Grundkörper (1) aus einem Fassadenwerkstoff bestehend aus einem Polyurethan-Hartschaum und in den Polyurethan-Hartschaum eingelagerten partikelartigen mineralischen, metallischen und/oder Kunststoffzusätzen in Verbindung mit einer auf den Grundkörper aufgebrachten Deck- und Zierschicht (2).

2. Vorrichtung nach Anspruch 1,
**dadurch gekennzeichnet, dass**
der Grundkörper plattenförmig ausgebildet ist, wobei die Deck- und Zierschicht die Ober- und Unterseite des Grundkörpers bedeckt.

3. Vorrichtung nach Anspruch 1,
**dadurch gekennzeichnet, dass**
der Grundkörper als ein massiver Block ausgebildet ist, wobei der Block schüssel- oder beckenartige Ausnehmungen, insbesondere Vertiefungen und Hohlräume, aufweist.

4. Vorrichtung nach einem der vorhergehenden Ansprüche,
**dadurch gekennzeichnet, dass**
die aufgebrachte Deck- und Zierschicht als eine mit einem Polyurethanklebstoff mit dem Grundkörper verklebte kratzfeste Hochdruck-Laminatschicht ausgebildet ist.

5. Vorrichtung nach einem der vorhergehenden Ansprüche,
**dadurch gekennzeichnet, dass**
die aufgebrachte Deck- und Zierschicht auflackiert ist.

6. Vorrichtung nach einem der Ansprüche 1, 2, 4 oder 5
**dadurch gekennzeichnet, dass**
der plattenförmige Grundkörper als ein einbaufertiges Standard-Verbundelement mit einer Standard-Dicke sowie einer Standard-Breite und einer Standard-Länge ausgebildet ist.

7. Vorrichtung nach einem der vorhergehenden Ansprüche,
**dadurch gekennzeichnet, dass**
die Einbauelemente als Elemente einer Wandverkleidung, insbesondere als Kachelelemente, ausgebildet sind.
